# EUROPEAN PATENT SPECIFICATION

(11) **EP 0 631 437 B1**
(45) Date of publication and mention of the grant of the patent: **02.09.1998**
(21) Application number: 94110004.2
(22) Date of filing: 28.06.1994
(51) Int. Cl.: H04N 5/92

(54) **System for recording teletext data**
System zur Aufzeichnung von Teletextdaten
Système pour l'enregistrement de données de télétexte

(30) Priority: 28.06.1993 JP 157466/93
(43) Date of publication of application: 28.12.1994
(73) Proprietor: PIONEER ELECTRONIC CORPORATION, Meguro-ku Tokyo 153 (JP)
(72) Inventor: Kuroda, Kazuo, c/o Tokorozawa Koujou, Tokorozawa-shi, Saitama-ken (JP)
(74) Representative: MEISSNER, BOLTE & PARTNER

(56) References cited:
- EP-A- 0 065 378
- US-A- 5 181 113
- IEEE TRANSACTIONS ON CONSUMER ELECTRONICS, vol. 35, no. 4, November 1989 NEW YORK US, pages 797-802, ICHINOI ET AL 'recording and decoding of teletext signal with s-vhs vcr'

## Description

The present invention relates to a system for recording data of a teletext broadcast, and more particularly to a system for simultaneously recording the teletext data and video data of a television signal or the same recording medium.

The teletext is a new type of multiplex broadcasting system where information other than regular television programs in the form of characters, simple graphics and additional sounds is transmitted. The information is repeatedly transmitted so that a user may receive the information he chooses at any chosen time.

The teletext data in the form of digital signal are carried during the vertical retrace line interval which is an empty time space in the television signal. The user may watch any teletext program of his choice on a television receiver having a built-in decoder, or an ordinary television receiver having a teletext adapter connected thereto.

In one of the systems for recording the teletext data, the data are decoded and converted into a television signal, which is recorded by a VCR.

In another system, the teletext data is applied to a personal computer, which is operated by an exclusive keyboard and stored on a hard disc.

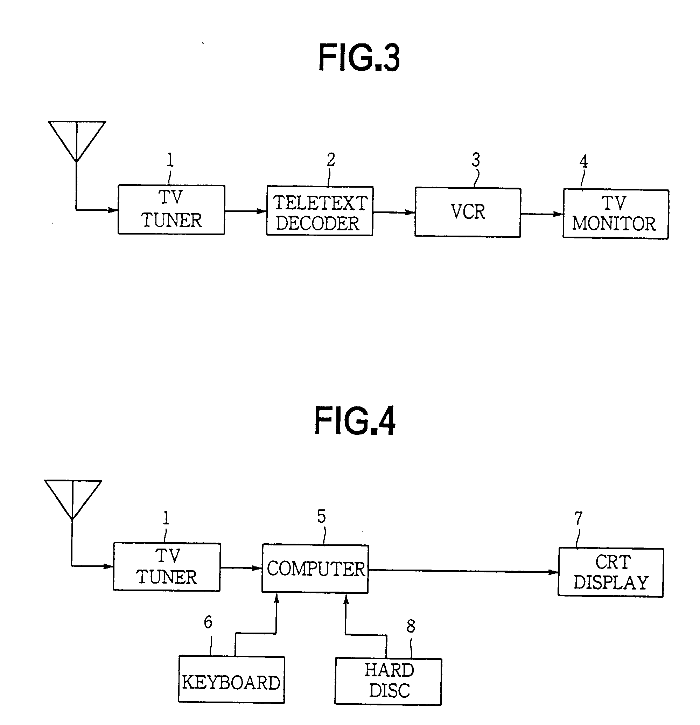

Referring to Fig. 3 showing the first system, a television receiver receives broadcast waves through an antenna. The wave of a particular channel which is selected by a television tuner 1 is converted into a television signal. Teletext data included in the television signal is derived at a teletext decoder 2 and recorded at a VCR 3 on a recording tape in a video cassette. The data is also fed to a television monitor 4 on which the data is shown.

Fig. 4 shows the second recording system where the broadcast wave converted into the television signal at the television tuner 1 is fed to a personal computer 5. The user operates an operation keyboard 6 connected to the computer 5 to extract the teletext data from the television signal and to correct errors included therein. The teletext data is then recorded on a hard disc 8. When reproducing the data, the personal computer 5 processes the data on the hard disc 8 and shows it on a screen of a CRT display 7.

The VCR has a pair of heads provided on opposite sides of a rotating drum with which a tape is contacted. One of the heads scans odd fields, and the other head scans even fields. Hence, the heads are switched in the vertical retrace line interval for completing one whole picture frame.

On the other hand, the teletext data are transmitted during lines 13H, 15H, 16H and 21H in the vertical retrace line interval. Therefore, the transmission period may overlap with the switching time of the heads, which causes it likely to skip the teletext data at recording. Hence in the conventional systems, the teletext data and the video data can not be recorded on the same medium at the same time.

### SUMMARY OF THE INVENTION

An object of the present invention is to provide a system for simultaneously recording the teletext data and video data on the same medium.

According to the present invention, there is provided a system for recording teletext data included in a video signal on a tape by a recording device having a pair of heads which are switched at every field, wherein the system comprises detector means for detecting teletext data, shifting means for shifting detected teletext data to a position in the video signal where the detected teletext data do not overlap with the switching time of the heads, and output means for outputting the video signal including the shifted teletext data to the recording device.

The other objects and advantages of this invention will become understood from the following description of embodiments with reference to the accompanying drawings.
Fig. 1 is a block diagram showing a system for recording teletext data according to an embodiment of the present invention;
Figs. 2a and 2b show lines in vertical retrace interval of a video signal over which text data are transmitted;
Fig. 3 is a block diagram showing the conventional system for receiving and recording teletext data on a VCR; and
Fig. 4 is a block diagram showing a conventional system for recording the teletext data on a hard disc.

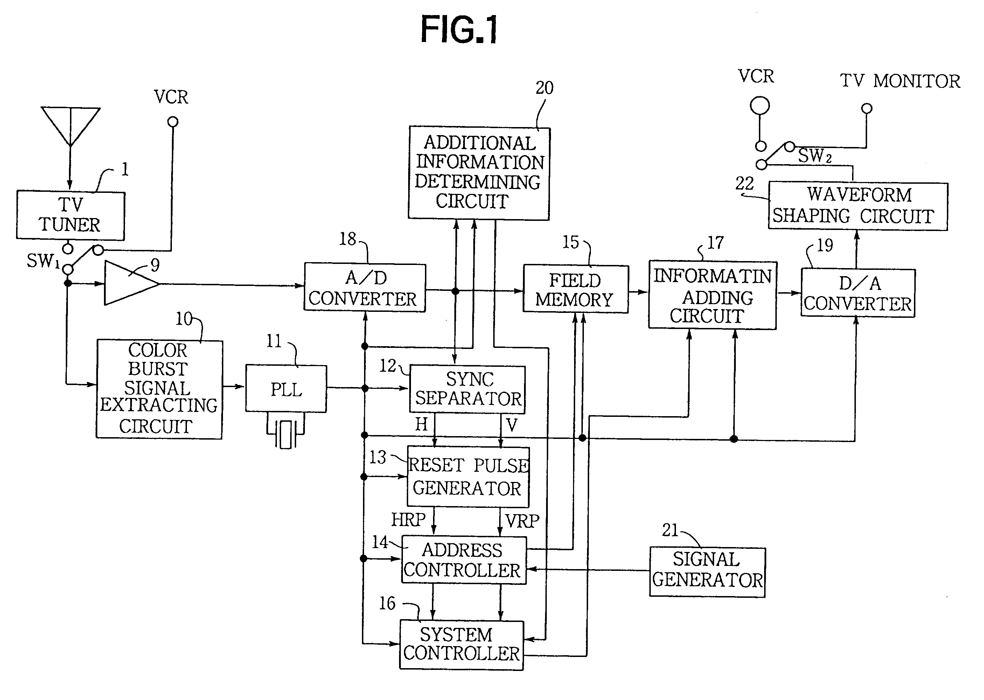

Fig. 1 shows an example of a teletext recording system according to an embodiment of the present invention wherein the teletext data and television data are recorded on a video tape. The same numerals in Fig. 1 as in Fig. 3 indicate the same parts in Fig. 1. The broadcast wave is tuned in by operating the tuner 1 and applied thereto through the antenna where the broadcast wave is converted into a television signal. The television signal is fed to an A/D converter 18 through a switch SW₁ and a buffer 9 so as to be converted into a digital signal. The switch SW₁ is also connected to a VCR so as to selectively connect the buffer 9 with the VCR when reproducing recorded data. The digital television signal including the teletext data transmitted during lines 14H, 15H, 16H and 21H of the vertical retrace interval is fed to a field memory 15 wherein the teletext data are stored.

The field memory 15 is connected to a D/A converter 19 through an information adding circuit 17 and converted into an analog teletext signal. The analog teletext signal is fed to a waveform shaping circuit 22, thereby restraining the influence of the carrier waves and a filter of the VCR. Only the teletext signal may be shaped at the shaping circuit 22 so that an optimum waveform is obtained without affecting the picture image created by the television signal. The waveform shaping circuit 22 is selectively connected to a VCR and a television monitor through a switch SW₂.

The television signal is further fed from the tuner 1 to a color burst signal extracting circuit 10 where a color burst signal is extracted from the television signal. The color burst signal is applied to a PLL 11 to generate clock pulses based thereon. Namely, the color burst signal is phase-locked and converted into a clock signal having a frequency which is four times as high as the original subcarrier (burst) signal.

The clock pulses are fed from the PLL 11 to the A/D converter 18, field memory 15, information adding circuit 17, D/A converter 19, a sync separator 12, reset pulse generator 13, address controller 14, system controller 16, and an additional information determining circuit 20, respectively, thereby controlling the operational timing of the entire system.

The digital television signal from the A/D converter 18 is further fed to the additional information deciding circuit 20 and the sync separator 12. At the sync separator 12, a horizontal sync signal H and a vertical sync signal V are extracted from the television signal. Horizontal driving pulses HD and vertical driving pulses VD are produced from the horizontal and vertical sync signals H and V, respectively. The pulses are fed to a reset pulse generator 13 which accordingly generates reference control signals in the form of horizontal reset pulses HRP and vertical reset pulses VRP so as to control the addresses of the field memory 15.

The vertical reset pulse VRP resets both the addresses of the rows and column of the field memory 15 to zero, while the horizontal reset pulse HRP resets the column address and increases the row addresses one by one. The column address is increased with every clock pulse fed from the PLL 11 one by one.

The address controller 14, in response to the reset pulses HRP and VRP, applies a signal to the field memory 15. Namely, when the row address of the field memory 15 reaches those corresponding to the lines 14H, 15H, 16H and 21H, data in the period are stored at the addresses corresponding to the lines 21H, 22H, 23H and 24H, respectively. When the row address reaches those of the lines 22H, 23H and 24H, data in the period are stored at the addresses corresponding to the lines 14H, 15H and 16H, respectively. Namely, teletext data are stored at the row addresses corresponding to 21H, 22H, 23H and 24H lines.

The address controller 14 is fed with standard signals such as read horizontal reset pulse and read vertical reset pulse from a signal generator 21 for reading out data from the field memory 15. When the standard signal is applied, the address of the read out data is reset, thereby controlling the reading of the field memory. Thus, data stored at the addresses corresponding to the 21H, 22H, 23H and 24H lines are read out.

The address controller 14 further feeds a control signal to the system controller 16 which in response applies a signal to the information adding circuit 17. The line information on 14H, 15H, 16H and 21H, that is, data on the original addresses of the teletext data are added to the data read out from the field memory 15.

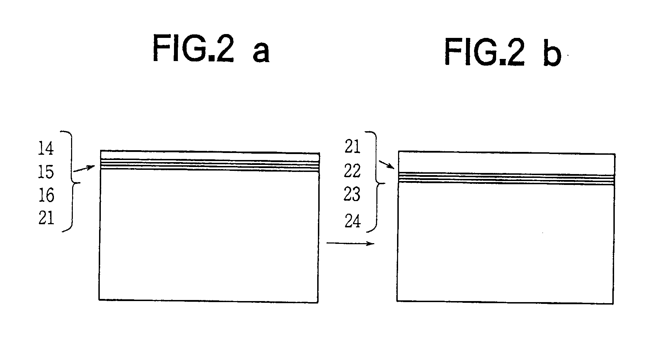

The derived teletext data is converted into an analog signal at a D/A converter 19 and shaped at a waveform shaping circuit 22, and fed to the VCR to be recorded. Since, the teletext data is moved from the lines 14H, 15H, 16H and 21H shown in Fig. 2a to the lines 21H, 22H, 23H and 24H shown in Fig. 2b, the period of which does not overlap with the switching time of the heads, the data are not erased.

In order to reproduce the recorded teletext data, the connections of the switches SW₁ and SW₂ are changed to connect the input to the VCR and the output to the television monitor. The television signal carrying the teletext data on the lines 21H, 22H, 23H and 24H is fed to the field monitor 15. The addresses of the data are converted to the addresses of 14H, 15H, 16H and 21H at the field memory based on the data added at the information adding circuit 17. Therefore, the original signal which can be applied to the conventional decoder 2 shown in Fig. 3 is restored.

Hence the teletext data is displayed on the television monitor.

The teletext data may be moved to other lines besides 21H, 22H, 23H and 24H.

According to the present invention, the position in the television signal in the television signal is moved from an area at which the video heads are switched. Thus the teletext data are accurately recorded and reproduced together with the video signal. Although the lines on which the teletext data are provided become closer to the effective area of picture, by decreasing the level of the teletext data, the effect on the picture is restrained.

The data on the original line positions of the teletext data are added at the information adding circuit 17, the lines may be freely moved to various positions without considering the model of the VCR equipment to be used.

While the presently preferred embodiments of the present invention have been shown and described, it is to be understood that these disclosures are for the purpose of illustration and that various changes and modifications may be made without departing from the scope of the invention as set forth in the appended claims.

## Claims

1. A system for recording teletext data contained in a video signal on a tape by a recording device (VCR) having a pair of heads which are switched at every field, the system comprising:
detector means (10 - 14) for detecting teletext data;
shifting means (16) for shifting detected teletext data to a position in the video signal where the detected teletext data do not overlap with a switching time of the heads; and
output means (19, 22) for outputting the video signal including the shifted teletext data to the recording device (VCR).

2. The system according to claim 1, wherein the detected teletext data are stored in a memory (15) at addresses which are shifted to addresses where the teletext data do not overlap with the switching timing.

3. The system according to claim 2, further comprising information adding means (17) for adding information on an original address of the teletext data to teletext data derived from the memory (15).

## Patentansprüche

1. System zur Aufzeichnung von Teletextdaten, die in einem Videosignal enthalten sind, auf einem Band durch eine Aufzeichnungsvorrichtung (VCR), die ein Paar von Köpfen hat, die bei jedem Halbbild umgeschaltet werden, welches System enthält:
eine Erfassungseinrichtung (10 - 14) zum Erfassen von Teletextdaten;
eine Verschiebeeinrichtung (16) zum Verschieben von erfassten Teletextdaten in eine Position in dem Videosignal, an der die erfassten Teletextdaten keine Überschneidung mit einer Umschaltzeit der Köpfe haben; und
eine Ausgabeeinrichtung (19, 20) zum Ausgeben des Videosignals, das die verschobenen Teletextdaten enthält, an die Aufzeichnungseinrichtung (VCR) .

2. System nach Anspruch 1, bei welchem die erfassten Teletextdaten in einem Speicher (15) unter Adressen gespeichert sind, die zu Adressen verschoben sind, an welchen die Teletextdaten keine Überschneidung mit der Umschaltzeitgebung haben.

3. System nach Anspruch 2, ferner enthaltend eine Addiereinrichtung (17) zum Hinzufügen von Informationen über eine Ursprungsadresse der Teletextdaten zu den aus dem Speicher (15) abgeleiteten Teletextdaten.

## Revendications

1. Système d'enregistrement des données télétexte contenues dans un signal vidéo sur une bande au moyen d'un dispositif d'enregistrement (VCR) présentant une paire de têtes qui sont commutées à chaque champ, le système comprenant :
des moyens de détection (10 -14) qui détectent les données télétexte,
des moyens de déplacement (16) qui déplacent les données télétexte détectées vers une position dans le signal vidéo où les données télétexte détectées ne se chevauchent pas avec le temps de commutation des têtes, et
des moyens de sortie (19, 22) qui envoient le signal vidéo comprenant les données télétexte déplacées vers le dispositif d'enregistrement (VCR).

2. Système selon la revendication 1, dans lequel les données télétexte détectées sont stockées dans une mémoire (15) à des adresses qui sont déplacées vers celles où les données télétexte ne se chevauchent pas avec le temps de commutation.

3. Système selon la revendication 2, comprenant de plus des moyens pour ajouter de l'information (17) qui ajoutent de l'information sur l'adresse originale des données télétexte aux données télétexte dérivées de la mémoire (15).
